# EUROPEAN PATENT SPECIFICATION

(11) **EP 1 544 056 B1**
(45) Date of publication and mention of the grant of the patent: **31.01.2007**
(21) Application number: 04029211.2
(22) Date of filing: 09.12.2004
(51) Int. Cl.: B60R 21/16

(54) **Curtain airbag device**
Vorhang-Gassack
Coussin gonflable en forme de rideau

(30) Priority: 19.12.2003 JP 2003423066
(43) Date of publication of application: 22.06.2005
(60) Divisional application: 06018336.5
(73) Proprietor: TAKATA CORPORATION, Minato-ku, Tokyo 106-8510 (JP)
(72) Inventor: Kumagai, Masayoshi, Minato-ku Tokyo 106-8510 (JP); Noguchi, Atsushi, Minato-ku Tokyo 106-8510 (JP)
(74) Representative: Banzer, Hans-Jörg

(56) References cited:
- EP-A- 1 260 414
- US-A- 5 588 672
- US-A1- 2002 024 203
- US-A1- 2003 090 095
- US-A1- 2003 111 828
- US-A1- 2003 178 824

## Description

The present invention relates to curtain airbag devices provided with curtain airbags which are capable of being deployed along inner side surfaces of vehicle cabins.

### [Background Art]

In a vehicle provided with a curtain airbag device, when the vehicle is involved in, for example, a side-on collision or rollover, curtain airbags are deployed downward along inner side surfaces (for example, doors and pillars) of the vehicle cabin so as to protect the head of each vehicle occupant and to keep each vehicle occupant inside the vehicle cabin.

US Patent No. 6,237,938 discloses a guide provided on a C pillar for guiding downward along the pillar the rear portion of a curtain airbag inflatable along the inner side surface of a vehicle cabin.

Moreover, the guide member in the US Patent No. 6,237,938 includes a member called a track having a box-shaped cross-section and a slider called an element and is arranged in the track movably in the longitudinal direction of the track. The rear end portion of the curtain airbag is tied to the element. For preventing the rear edge portion of the curtain airbag from being returned upward after being moved downward, latches are arranged at a regular interval along the substantially entire length of the track member.

The top and bottom ends of the track are provided with mounting flanges, and each of the flanges is fixed to the C pillar with a bolt or a screw.

EP 1 260 414 A discloses a curtain airbag device according to the preamble of claim 1 wherein gas is supplied via an opening to a curtain airbag having a plurality of vertical chambers, wherein a first vertical chamber is guided along a guide member. A partitioning joined portion separating the first vertical chamber from the remaining vertical chambers is higher than the remaining partitioning joined portions such that gas discharged from the inflator may easily flow into the first vertical chamber. Further curtain airbag devices are known from US 5,588,672, US 2003/0178824 Al and US 2002/0024203 Al.

### [Problems to be Solved by the Invention]

Accordingly, the object of the present invention is to provide a curtain airbag device in which each curtain airbag is capable of being deployed very smoothly along a guide member.

### [Means for Solving the Problems]

According to the present invention, this object is achieved by a curtain airbag device as defined in claim 1. The dependent claims define preferred and advantageous embodiments of the invention.

A curtain airbag device according to an aspect of the present invention includes a curtain airbag which is capable of being deployed downward along an inner side surface of a vehicle cabin; a gas generator for supplying gas to the curtain airbag so as to inflate the curtain airbag; and a guide member attached to a pillar of a vehicle and extending vertically for guiding the curtain airbag for the downward deployment. The curtain airbag includes a vertical chamber and an adjacent chamber adjacent to the vertical chamber, the vertical chamber being inflatable so as to extend vertically along the guide member. An upper portion of the curtain airbag is provided with a flow path for transferring the gas supplied by the gas generator. An upper portion of the vertical chamber and an upper portion of the adjacent chamber communicate with one end of the flow path. An opening area A of a first communication section between the vertical chamber and the one end of the flow path is at least five times and not more than ten times greater than an opening area B of a second communication section between the adjacent chamber and the one end of the flow path.

According to such a curtain airbag device, a large amount of gas enters the vertical chamber when the curtain airbag starts to become deployed and the vertical chamber is inflated downward quickly. Since the airbag is guided downward by the guide member as the vertical chamber is inflated, the curtain airbag can be deployed very quickly.

The ratio of the opening area A to the opening area B is set at at least five and not more then ten. Such a ratio ensures a large amount of gas to enter the vertical chamber.

This aspect of the present invention is preferably applied in a case where the flow path extends along the upper portion of the curtain airbag, and the upper portion of the vertical chamber is open upward to the one end of the flow path and the upper portion of the adjacent chamber is open horizontally to the one end of the flow path, wherein the gas from the flow path tends to flow directly to the adjacent chamber from the end of the flow path. However, according to the present invention, since the opening area at the entrance portion of the vertical chamber is at least five times greater than the opening area at the entrance portion of the adjacent chamber, a major portion of the gas reaching the end of the flow path changes its direction and enters the vertical chamber. Thus, the vertical chamber can be inflated quickly.

A different curtain airbag device for other applications which is not subject of the present invention includes a curtain airbag which is capable of being deployed downward along an inner side surface of a vehicle cabin; a gas generator for supplying gas to the curtain airbag so as to inflate the curtain airbag; and a guide member attached to a pillar of a vehicle and extending vertically, the guide member guiding the curtain airbag for the downward deployment. The curtain airbag includes a vertical chamber and an adjacent chamber adjacent to the vertical chamber, the vertical chamber being inflatable so as to extend vertically along the guide member. An upper portion of the curtain airbag is provided with a flow path for transferring the gas supplied by the gas generator. An upper portion of the vertical chamber communicates with one end of the flow path. A lower portion of the vertical chamber communicates with a lower portion of the adjacent chamber.

Similarly, according to such a curtain airbag device, a large amount of gas enters the vertical chamber when the curtain airbag starts to be deployed. This allows the vertical chamber to be inflated downward quickly so that the curtain airbag can be deployed very quickly while being guided by the guide member.

It is preferable that such a curtain airbag further includes a link strap protruding from the lower end portion of the vertical chamber, the link strap being guided by the guide member. According to such a structure, when the vertical chamber is inflated downward, the link strap smoothly moves downward as it is pulled by the lower end portion of the vertical chamber.

### [Advantages]

According to the curtain airbag device and the guide unit of the present invention, when the curtain airbag is to be deployed, the curtain airbag is guided by the guide member and the vertical chamber disposed near the guide member of the curtain airbag is inflated downward quickly so as to allow quick deployment of the curtain airbag.

### [Brief Description of the Drawings]

Fig. 1 is a schematic diagram of a curtain airbag device according to an embodiment of the present invention.
Fig. 2 includes a side view and a cross-sectional view of a curtain airbag.
Fig. 3 is an enlarged view of a rear portion of the curtain airbag.
Fig. 4 is an enlarged view illustrating a rear portion of a curtain airbag of a curtain airbag device which is not an embodiment of the present invention.

### [Best Mode for Carrying Out the Invention]

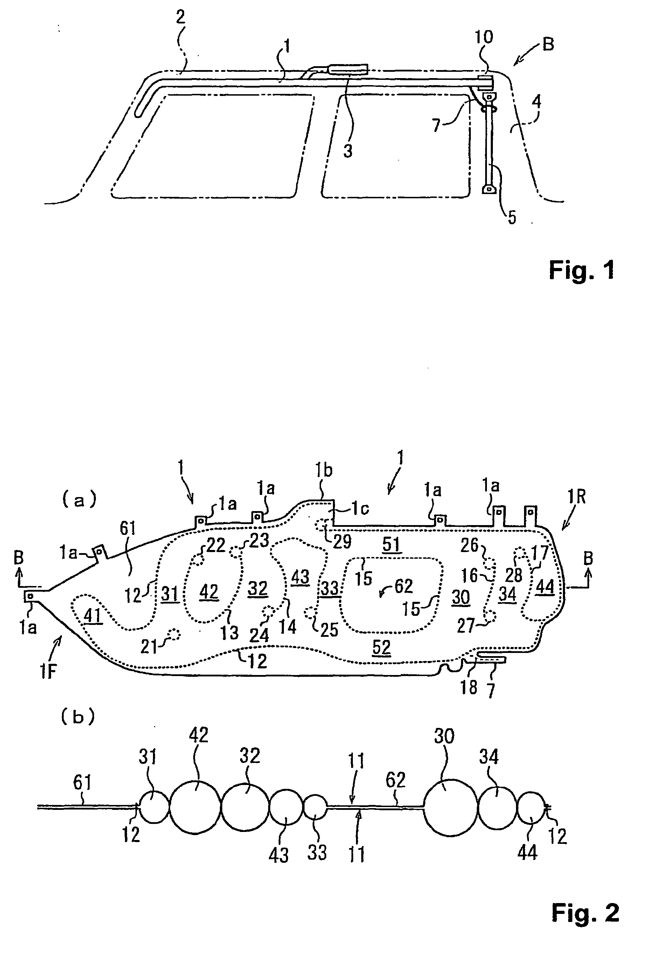

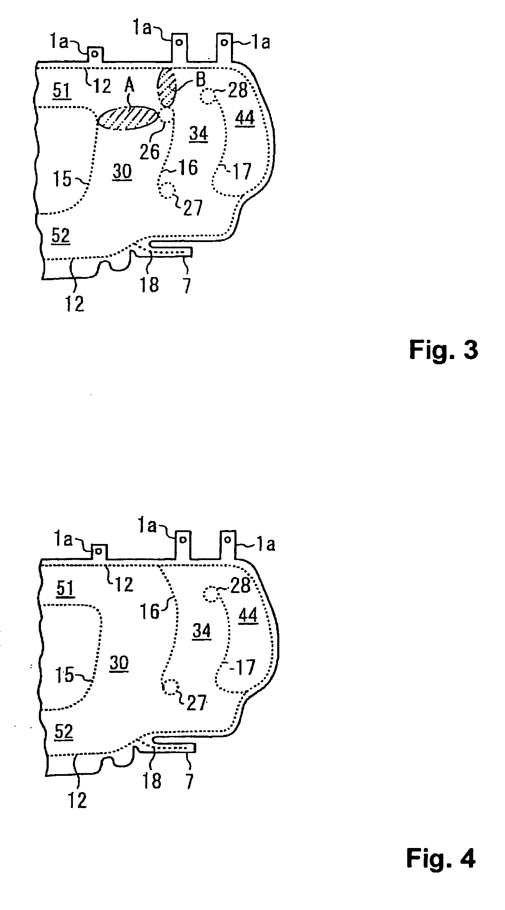

Embodiments will now be described with reference to the drawings. Fig. 1 illustrates a curtain airbag device and a guide unit thereof according to an embodiment of the present invention. Fig. 2(a) is a side view of a curtain airbag in its inflated state. Fig. 2(b) is a cross-sectional view taken along line B-B in Fig. 2(a). Fig. 3 is an enlarged view of a rear portion of the curtain airbag.

According to the embodiment, a curtain airbag 1 is disposed along a roof side 2 of a vehicle (border section between the ceiling and the inner side surface of a vehicle cabin) while being folded in a slender manner in the longitudinal direction of the vehicle. When a vehicle is involved in a side-on collision or a rollover, for example, the curtain airbag 1 is inflated by gas being sent from an inflator 3 and is deployed in the downward direction of the vehicle body along the side surface, i.e. doors and pillars, in the vehicle cabin. An upper edge of the curtain airbag 1 is provided with tabs 1a (see Fig. 2(a)) which are fastened to the corresponding roof side 2.

Referring to Fig. 2(a), the central portion of the upper edge of the curtain airbag 1 with respect to the longitudinal direction is provided with a projection 1b which extends upward. The projection 1b is provided with a gas-entrance hole 1c. A tip of the inflator 3 is inserted through the gas-entrance hole 1c and is tied thereto with a band (which is not shown in the drawings).

One of the pillars in a vehicle (a C pillar 4 in the first embodiment) has a guide rod 5 attached thereto, which functions as a guide member for guiding the rear portion of the curtain airbag 1 along the C pillar 4 when the curtain airbag 1 is deployed along the C pillar 4 in the downward direction of the vehicle body. The guide rod 5 has a rod-like structure which extends along the C pillar 4 in the vertical direction of the vehicle body. Both the upper and lower ends of the guide rod 5 are fixed to the C pillar 4 with, for example, bolts.

The vicinity of the bottom corner area in the rear portion of the curtain airbag 1 has a base end of a link strap 7 attached thereto. On the other hand, a extremity of the link strap 7 is loosely tied around the guide rod 5. The link strap 7 is movable vertically along the guide rod 5.

A curtain-guide member 10, also known as a jump base, is disposed on the roof side 2 above the C pillar 4. When the curtain airbag 1 is to be deployed, the curtain-guide member 10 allows the curtain airbag 1 to pass over a pillar garnish so that the curtain airbag 1 is guided towards the interior of the vehicle cabin.

Although not shown in the drawings, the roof side 2 is provided with a roof-side garnish which covers the curtain airbag 1.

The curtain airbag 1 is formed by overlapping two sheets 11 and 11 having substantially the same shape, such that one of the sheets faces an inner side surface of the vehicle cabin and the other faces the interior of the vehicle cabin. The two sheets 11 and 11 are connected to each other by linear connected portions 12 to 17 and circular connected portions 21 to 29 so as to form a first vertical chamber 30, vertical chambers 31 to 34, bag chambers 41 to 44, horizontal chambers 51 and 52, and non-inflatable portions 61 and 62.

The linear connected portions 12 to 18 and the circular connected portions 21 to 29 hermetically join the sheets 11 and 11 together. For the connection between the two sheets 11 and 11, high-strength connecting means (such as stitching with high-strength threads, bonding with an adhesive having high adhesivity, or welding) is used so that the two sheets 11 are prevented from being separated from each other even when the pressure inside the curtain airbag 1 reaches the upper limit pressure value.

The linear connected portion 12 extends substantially around the curtain airbag 1, but at a front portion 1F of the curtain airbag 1, the linear connected portion 12 extends downward from the upper edge of the front portion 1F so as to form a substantially U-shape. This forms the non-inflatable portion 61 along the upper edge of the front portion 1F and the bag chamber 41 at the frontmost part of the front portion 1F.

The linear connected portion 12 extends along an edge of the projection 1b of the curtain airbag 1, but is cut off at the rear edge of the projection 1b so as to form the gas-entrance hole 1c of the curtain airbag 1.

The linear connected portion 13 is disposed slightly towards the front of the curtain airbag 1 with respect to the center of the curtain airbag 1. The linear connected portion 13 is U-shaped, and its inner region forms the bag chamber 42. The upper portion of the bag chamber 42 communicates with the gas-entrance hole 1c, whereas the lower portion has no openings.

The linear connected portion 13 and the peripheral linear connected portion 12 at the front portion 1F of the curtain airbag 1 have the vertical chamber 31 disposed therebetween. The upper portion of the vertical chamber 31 communicates with the gas-entrance hole 1c, and the lower portion communicates with the bag chamber 41 and with the lower portion of the vertical chamber 32, which will be described below. To prevent the lower portion of the vertical chamber 31 from being over-inflated, the circular connected portion 21 is provided.

The linear connected portion 14 has a reversed U-shape and is disposed at the central portion of the curtain airbag 1 with respect to the longitudinal direction. The inner region of the linear connected portion 14 forms the bag chamber 43. The lower portion of the bag chamber 43 communicates with the lower portions of the vertical chambers 32 and 33, whereas the upper portion of the bag chamber 43 has no openings.

The linear connected portion 14 and the linear connected portion 13 have the vertical chamber 32 disposed therebetween. The upper portion of the vertical chamber 32 communicates with the gas-entrance hole 1c.

The linear connected portion 15 is disposed slightly towards the back of the curtain airbag 1 with respect to the center of the curtain airbag 1. The linear connected portion 15 is substantially square-shaped. The upper edge and the lower edge of the linear connected portion 15 are respectively not in contact with the upper edge and the lower edge of the linear connected portion 12. Thus, the horizontal chamber 51 is formed between the upper edge of the linear connected portion 12 and the upper edge of the linear connected portion 15, and the horizontal chamber 52 is formed between the lower edge of the linear connected portion 12 and the lower edge of the linear connected portion 15.

The linear connected portion 15 and the linear connected portion 14 have the vertical chamber 33 disposed therebetween. The upper portion of the vertical chamber 33 communicates with the front portion of the horizontal chamber 51 and with the gas-entrance hole 1c. The lower portion of the vertical chamber 33 communicates with the lower portion of the bag chamber 43 and the front portion of the horizontal chamber 52.

The inner region of the linear connected portion 15 is cut off from the gas-entrance hole 1c so as to form the non-inflatable portion 62.

At the rear portion of the curtain airbag 1, the linear connected portion 16 extending vertically is disposed. Moreover, further towards the back of the curtain airbag 1, the linear connected portion 17 having a substantially L-shape is disposed.

The linear connected portions 15 and 16 have the first vertical chamber 30 disposed therebetween. The upper and lower portions of the first vertical chamber 30 respectively communicate with the horizontal chambers 51 and 52.

The linear connected portions 16 and 17 have the vertical chamber 34 disposed therebetween. The upper and lower portions of the vertical chamber 34 respectively communicate with the upper and lower portions of the first vertical chamber 30.

The bag chamber 44 is formed between the linear connected portion 17 and a part of the linear connected portion 12 extending along a rear portion 1R of the curtain airbag 1. The upper portion of the bag chamber 44 communicates with the upper portion of the vertical chamber 34, whereas the lower portion of the bag chamber 44 has no openings.

Opposite ends of each of the linear connected portions 13, 14, 16, and 17 are provided with the corresponding circular connected portions 22 to 28 for reinforcement. The lower end of the linear connected portion 17 is connected with the linear connected portion 12.

The link strap 7 is positioned below the first vertical chamber 30. The link strap 7 is formed by the sheets 11 and 11 extending in an elongated shape and joined together by the linear connected portion 18.

In the embodiment, the rear edge of the linear connected portion 15 extends substantially vertically. The first vertical chamber 30 is formed between the rear edge of the linear connected portion 15 and the linear connected portion 16 extending vertically. The upper end of the linear connected portion 16 is connected with the circular connected portion 26.

The first vertical chamber 30 and the vertical chambers 31 to 34 extend from the upper edge to the lower edge of the curtain airbag.

Referring to Fig. 3, the horizontal chamber 51 extends to the upper portion of the first vertical chamber 30, and the upper end portion of the first vertical chamber 30 is open upward to one flow-path end of the horizontal chamber 51 in the direction. The upper portion of the first vertical chamber 30 below the linear connected portion 12 and adjacent to the circular connected portion 26 functions as a communication section between the flow-path end of the horizontal chamber 51 and the first vertical chamber 30. The opening area of this communication section (which is referred to as the cross-sectional area when the curtain airbag 1 is inflated) is defined as A.

On the other hand, a section between the upper linear connected portion 12 and the circular connected portion 26 functions as a communication section between the flow-path end of the horizontal chamber 51 and the vertical chamber 34. The opening area of this communication section is defined as B. This communication section is open to the horizontal chamber 51 in the horizontal direction.

The opening area A is greater than the opening area B, and is at least five and not more than ten times greater than the opening area B.

When a vehicle provided with such a curtain airbag device is involved in a side-on collision or a rollover, the inflator 3 generates gas so as to inflate the curtain airbag 1. The curtain airbag 1 pushes open the roof-side garnish, and is guided by the curtain-guide member 10 beyond the upper edge of the pillar garnish towards the interior of the vehicle cabin, and then is deployed downward along the vehicle interior side of the pillar garnish.

The rear portion of the deploying curtain airbag 1 is guided by the guide rod 5 via the link strap 7. The link strap 7 starts moving downward along the guide rod 5 when the curtain airbag 1 begins to be deployed. In this case, the link strap 7 moves downward while ripping through the pillar garnish and a weather strip.

Furthermore, the link strap 7 moves downward along the guide rod 5 with the curtain airbag until the curtain airbag 1 reaches the bottommost point of deployment. Since the link strap 7 connects the curtain airbag 1 and the guide rod 5 together, the curtain airbag 1 can be deployed along the corresponding side surface of the vehicle cabin.

In the embodiment, the opening area A of the upper portion of the first vertical chamber 30 is at least five times and not more than ten times greater than the opening area B of the upper portion of the vertical chamber 34. For this reason, a major portion of gas flowing towards the back of the curtain airbag via the horizontal chamber 51 changes its direction at the flow-path end of the horizontal chamber 51, such that a large amount of gas smoothly flows into the first vertical chamber 30. This allows the first vertical chamber 30 to be inflated downward quickly. Accordingly, the curtain airbag 1 is capable of being deployed quickly along the guide rod 5.

Fig. 4 illustrates an alternative curtain airbag which is not an embodiment of the present invention, and is a diagram illustrating the rear portion of the curtain airbag.

According to the alternative curtain airbag, the linear connected portion 16 extends further upward so as to be connected with the linear connected portion 12 adjacent to the upper edge of the curtain airbag.

Other elements in the alternative curtain airbag are the same as those in the first embodiment shown in Figs. 1 to 3.

In the alternative curtain airbag, all the gas flowing through the horizontal chamber 51 enters the first vertical chamber 30, and therefore, the first vertical chamber 30 can be inflated downward rapidly. Thus, the curtain airbag 1 is capable of being deployed rapidly along the guide rod 5.

The technical scope of the present invention is not limited to the above embodiment, and modifications are permissible within the scope of the present invention as defined by the claims. For example, the number and positions of the vertical chambers and the bag chambers are not limited to those in the drawings.

In the above embodiment, the vertical chamber 34 and the bag chamber 44 functions as the adjacent chambers of the first vertical chamber 30. Alternatively, only one of the vertical chamber 34 and the bag chamber 44 may be provided such that only one adjacent chamber is provided with respect to the first vertical chamber 30. On the other hand, three or more adjacent chambers may alternatively be provided.

## Claims

1. A curtain airbag device comprising:
a curtain airbag (1) which is capable of being deployed downward along an inner side surface of a vehicle cabin;
a gas generator (3) for supplying gas to the curtain airbag (1) so as to inflate the curtain airbag (1); and
a guide member (5) attached to a pillar (4) of a vehicle and extending vertically, for guiding the curtain airbag (1) for the downward deployment,
wherein the curtain airbag (1) includes a vertical chamber (30) and an adjacent chamber (34) adjacent to the vertical chamber (30), the vertical chamber (30) being inflatable so as to extend vertically along the guide member (5),
wherein an upper portion of the curtain airbag (1) is provided with a flow path for transferring the gas supplied by the gas generator (3),
wherein an upper portion of the vertical chamber (30) and an upper portion of said adjacent chamber (34) communicate with one end of the flow path,
**characterized in that**
a first opening area (A) of a first communication section between the vertical chamber (30) and said one end of the flow path is at least five times and not more than ten times greater than a second opening area (B) of a second communication section between said adjacent chamber (34) and said one end of the flow path.

2. The curtain airbag device according to Claim 1, wherein the flow path extends along the upper portion of the curtain airbag (1),
wherein the upper portion of the vertical chamber (30) is open upward to said one end of the flow path, and
wherein the upper portion of said adjacent chamber (34) is open horizontally to said one end of the flow path.

3. The curtain airbag device according to one of Claims 1 and 2, wherein said adjacent chamber (30) comprises a plurality of adjacent chambers (44), the adjacent chambers (44) receiving the gas from the flow path via the second communication section having the second opening area (B).

## Patentansprüche

1. Vorhangairbagvorrichtung umfassend:
einen Vorhangairbag (1), welcher in der Lage ist, nach unten entlang einer inneren Seitenoberfläche einer Fahrzeugkabine entfaltet zu werden,
einen Gasgenerator (3) zum Zuführen von Gas zu dem Vorhangairbag (1), um den Vorhangairbag (1) aufzublasen, und
ein an einer Säule (4) eines Fahrzeugs angebrachtes und sich vertikal erstreckendes Führungselement (5) zum Führen des Vorhangairbags (1) für die Entfaltung nach unten,
wobei der Vorhangairbag (1) eine vertikale Kammer (30) und eine zu der vertikalen Kammer (30) benachbarte benachbarte Kammer (34) umfasst, wobei die vertikale Kammer (30) aufblasbar ist, um sich vertikal entlang des Führungselements (5) zu erstrecken,
wobei ein oberer Abschnitt des Vorhangairbags (1) mit einem Strömungspfad zum Übertragen des von dem Gasgenerator (3) zugeführten Gases versehen ist,
wobei ein oberer Abschnitt der vertikalen Kammer (30) und ein oberer Abschnitt der benachbarten Kammer (34) mit einem Ende des Strömungspfades kommunizieren,
**dadurch gekennzeichnet, dass**
eine erste Öffnungsfläche (A) eines ersten Kommunikationsabschnitts zwischen der vertikalen Kammer (30) und dem einen Ende des Strömungspfades mindestens fünf mal und nicht mehr als zehn mal größer ist als eine zweite Öffnungsfläche (B) eines zweiten Kommunikationsabschnitts zwischen der benachbarten Kammer (34) und dem einen Ende des Strömungspfades.

2. Vorhangairbagvorrichtung nach Anspruch 1, wobei sich der Strömungspfad entlang des oberen Abschnitts des Vorhangairbags (1) erstreckt,
wobei der obere Abschnitt der vertikalen Kammer (30) zu dem einen Ende des Strömungspfades nach oben offen ist, und
wobei der obere Abschnitt der benachbarten Kammer (34) horizontal zu dem einen Ende des Strömungspfades offen ist.

3. Vorhangairbagvorrichtung nach Anspruch 1 oder Anspruch 2, wobei die benachbarte Kammer (30) eine Vielzahl von benachbarten Kammern (44) umfasst, wobei die benachbarten Kammern (44) das Gas von dem Strömungspfad über den zweiten Kommunikationsabschnitt mit der zweiten Öffnungsfläche (B) empfangen.

## Revendications

1. Un coussin gonflable de sécurité formant rideau, comprenant :
un sac gonflable de sécurité (1) formant rideau, capable d'être déployé vers le bas le long d'une surface latérale intérieure d'un habitacle de véhicule;
un générateur à gaz (3) pour fournir du gaz au sac gonflable de sécurité (1) formant rideau pour gonfler le sac gonflable de sécurité (1) formant rideau;
un organe de guidage (5) fixé sur un montant (4) d'un véhicule et s'étendant verticalement, pour guider le sac gonflable de sécurité (1) formant rideau pour le déploiement vers le bas,
dans lequel le sac gonflable de sécurité (1) formant rideau comprend une chambre verticale (30) et une chambre adjacente (34), adjacente à la chambre verticale (30), la chambre verticale (30) étant gonflable de manière à s'étendre verticalement le long de l'organe de guidage (5),
dans lequel une partie supérieure du sac gonflable de sécurité (1) formant rideau est munie d'un chemin d'écoulement pour le transfert du gaz fourni par le générateur de gaz (3),
dans lequel une partie supérieure de la chambre verticale (30) et une partie supérieure de ladite chambre adjacente (34) communiquent avec une extrémité du chemin d'écoulement,
**caractérisé en ce qu'**une première aire d'ouverture (A) d'une première partie de communication, entre la chambre verticale (30) et ladite une extrémité du chemin d'écoulement, est d'au moins cinq fois et pas plus de dix fois supérieure à une deuxième aire d'ouverture (B) d'une deuxième partie de communication, entre ladite chambre adjacente (34) et ladite une extrémité du chemin d'écoulement.

2. Le coussin de sécurité (1) formant rideau selon la revendication 1, dans lequel le chemin d'écoulement s'étend le long de la partie supérieure du sac gonflable de sécurité (1) formant rideau,
dans lequel la partie supérieure de la chambre verticale (30) est ouverte vers le haut à ladite une extrémité du chemin d'écoulement, et
dans lequel la partie supérieure de ladite chambre adjacente (34) est ouverte horizontalement vers ladite une extrémité du chemin d'écoulement.

3. Le coussin de sécurité (1) formant rideau selon l'une des revendications 1 et 2, dans lequel ladite chambre adjacente (30) comprend une pluralité de chambres adjacentes (44), les chambres adjacentes (44) recevant le gaz venant du chemin d'écoulement via la deuxième partie de communication ayant la deuxième aire d'ouverture (B).
